# EUROPEAN PATENT APPLICATION

(11) **EP 2 635 072 A1**
(43) Date of publication of application: **04.09.2013**
(21) Application number: 12360014.0
(22) Date of filing: 01.03.2012
(51) Int. Cl.: H04W 48/20

(54) **Network load management**

(71) Applicant: Alcatel Lucent, 75007 Paris (FR)
(72) Inventor: Zhou, Hai, Faringdon, Oxfordshire SN7 7FG (GB)
(74) Representative: Script IP Limited

(57) **Abstract**

A method of influencing distribution of idle mode user equipment across a wireless communication network comprising a plurality of radio coverage cells, and a computer program product and network control node operable to perform the method. The method comprises: determining loading of at least one of the radio coverage cells based on an indication of the at least one radio coverage cell operating parameters; generating an indication of radio coverage cell loading for at least one of the plurality of cells; and communicating the generated indication of radio coverage cell loading to the idle mode user equipment. By offering dynamically changeable cell selection or reselection criteria, aspects provide network operators with mechanisms to directly influence the number of user equipment in idle mode in a particular cell.

## Description

### FIELD OF THE INVENTION

The present invention relates to a method of influencing distribution of idle mode user equipment across a wireless communication network comprising a plurality of radio coverage cells, a network control node and a computer program product operable to perform that method.

### BACKGROUND

Wireless communication networks are known. In a cellular system, radio coverage is provided to user equipment, for example, mobile telephones, by geographical area. Those geographical areas of radio coverage are known as cells. A base station is located in each geographical area to provide the required radio coverage. A base station may support more than one cell providing coverage in the same geographical area. User equipment in the area served by a base station receives information and data from that base station and transmits information and data to that base station.

Information and data transmitted by a base station to user equipment occurs on channels of radio carriers known as downlink carriers. Information and data transmitted by user equipment to a base station occurs on uplink channels of radio carriers known as uplink carriers.

In wireless communication networks user equipment can move between geographical base station coverage areas. Active services provided to user equipment are typically overseen by a radio network controller (RNC). The RNC communicates with user equipment and base stations and determines which base station each user equipment is to be primarily connected to. Furthermore, the RNC acts to control and communicate with base stations and user equipment when user equipment moves from a geographical area served by one base station to a geographical area served by another base station or between cells or sectors served by the same base station. RNC management of cell loading occurs when the user equipment is operating in a connected radio resource control (RRC) state.

User equipment may operate in various modes in, for example, a UMTS communications network. On initial turning on of user equipment within a cell it will typically operate in an idle mode. Once it synchronises and attaches itself to a base station it gains radio resource control (RRC) connection and may be referred to, in some of those RRC states as being in a connected mode. User equipment in idle mode does not have a dedicated radio resource control connection. If user equipment is RRC connected it can be in one of five different RRC states: cell-DCH, cell_FACH, enhanced cell_FACH, cell_PCH or URA_PCH states, only some of which are associated with user equipment having a dedicated radio resource.

Mobile terminals in wireless networks predominantly have two modes of operation as outlined above; that is to say, connected mode or unconnected mode also known as "idle mode".

It will be understood that when in connected mode, user equipment has a dedicated connection on which data communication occurs between user equipment and a base station. When in such a connected state the network takes steps to ensure that overall network operation is optimised by, for example, taking steps to optimise and share loads between cells and between base stations.

It is desired to provide improved overall network operation even if user equipment is operating in idle mode.

### SUMMARY

Accordingly, a first aspect provides a method of influencing distribution of idle mode user equipment across a wireless communication network comprising a plurality of radio coverage cells, the method comprising: determining loading of at least one of the radio coverage cells based on an indication of at least one operating parameter of the at least one radio coverage cell; generating an indication of radio coverage cell loading for at least one of the plurality of cells; and communicating the generated indication of radio coverage cell loading to the idle mode user equipment.

The first aspect recognises that user equipment; for example, mobile terminals in wireless networks, have two modes of connection: connected and idle mode. Although whilst in connected mode various methods exist to balance cell loads across a network, those techniques are not used when user equipment is operating in an idle mode. That is to say, the first aspect recognises that dynamic cell load balancing for idle mode user equipment does not occur. It will be appreciated that dynamically load balancing user equipment within a network operating in a connected mode typically involves hard handover processes and those processes are managed by an RNC. It will be understood that connected mode load balancing often carries a high risk, since the call may be dropped during hard handover and user equipment may spend time not connected to any base station, not connected to the network and thus unable to take communicate with the network. For user equipment operating in a connected mode, dynamic cell load balancing techniques are used in order to maintain user experience as well as in order to simply balance load between base stations. If a cell is heavily loaded, it is more likely that a call will fail and thus it is advantageous for the network to operate to move connected equipment away from a heavily loaded cell before might otherwise be necessary.

When user equipment is operating in idle mode, dynamically managing camping procedures and cell loads can result in improved network performance, since those user equipment may become connected and need dedicated support with a cell they have selected to "camp on".

User equipment operating in an idle mode use parameters such as pilot signal strength and pilot signal to interference ratio in order to select (or reselect) a cell to camp on. Once the cell reselection or selection is made, the user equipment is associated with that cell on that base station and could be contacted by the network, for example, via a paging request, in the selected cell, and would be operable to initiate calls in the selected cell. It will thus be understood that, for example, in a heavily populated area, a cell may attract many mobile terminals operating in idle mode (since they see such a cell as having most attractive selection criteria) and that cell load would increase if all those mobile terminals were to enter a connected mode. The first aspect recognises that it is possible to improve network performance by dynamically managing the number or nature of mobile terminals camped on at a particular cell. Control of camped on idle user equipment would impact cell load when those user equipment enter a connected mode.

It will be understood that typical cell selection parameters and criteria used by user equipment to determine an appropriate cell to camp on to may not explicitly represent the level of cell loading being experienced by a cell. It is, however, appreciated that the pilot signal to interference ratio is likely to vary as a function of interference, part of which is likely to be attributable to user equipment operating within a cell. Besides that, the parameters used by user equipment to become connected to a base station do not vary as a function of cell load. In particular, it will be appreciated that the Signal to Noise and Interference Ratio (SNIR) of a cell measured at user equipment will not be explicitly managed by a control node, for example, RNC or MME, and thus that the load of idle mode user equipment is not dynamically managed by, or across the network by use of that criteria.

Known solutions rely on the fact that pilot signal to interference ratio is, at least in part, related to cell load. However, known methods of controlling user equipment do not allow operators to control the number of mobile terminal user equipment operating in an idle mode. Aspects described introduce cell selection parameters which change directly as a function of cell load in real time and, thus, the number of mobile terminals camped on in a cell in idle mode may be controlled.

It is possible for two criteria measured by user equipment to be used as primary indicators in order to select a cell. One of those criteria is pilot signal strength, the other is pilot signal to interference ratio. The thresholds and ranking procedures implemented at user equipment for the two criteria are typically fixed; that is to say, they do not change with time or with cell load. Such methods operate such that user equipment rank possible cells by, for example, pilot signal to interference ratio: the highest being the most potentially attractive for the user equipment to select. Static weightings, or offsets, may be implemented when a wireless network is first configured, to take into account, for example, location of a cell. A cell located at a busy pedestrian hub, or train station, for example may be configured by the network provider to have an offset to dissuade idle mode user equipment from selecting that cell. User equipment receive the pre-configured static offset via a system information broadcast message from each cell. The ranking of available cells is then modified, taking into account the offsets for each cell and the most attractive cell, having highest recalculated signal to interference ratio, for example, will be the cell chosen by user equipment for selection. In the event that two cells have the same recalculated signal to interference, the pure pilot strength measurement taken by the user equipment will be used as a secondary selection parameter. That is to say, the cell having the highest pilot signal strength (of the two or more cells having the highest recalculated signal to interference ratio) will be selected.

Aspects described herein allow user equipment to see cell selection thresholds for selection parameters such as pilot signal strength and pilot signal to interference ratio as a function of cell load. That is to say, according to embodiments, the offsets or weightings transmitted in system broadcast messages in each cell may be altered dynamically in response to cell load being experienced in each cell. Thus, the number of mobile terminals camped on in different cells in an idle mode may be dynamically controlled.

According to one embodiment, the determining comprises assessing a time dependent radio coverage cell operating parameter. Accordingly, cell operating parameters change over time and rather than simply accept and communicate a pre-selected indication of radio coverage cell loading to idle mode user equipment, the indication may be dynamically generated in real time, or periodically refreshed to take account of changed loading being experienced at a cell.

According to one embodiment, the radio coverage cell operating parameter may be directly indicative of loading experienced by the at least one radio coverage cell. Accordingly, the operating parameter or parameters being monitored by a network control node may be directly related to the number of user equipment being served, in connected, or other modes, by that cell.

In one embodiment, the radio coverage cell operating parameter is indicative of uplink loading in the at least one radio coverage cell. Accordingly, the first aspect may influence idle mode user equipment to avoid cells which are heavily loaded in uplink bands.

In one embodiment, the radio coverage cell operating parameter is indicative of downlink loading in the at least one radio coverage cell. Accordingly, the first aspect may influence idle mode user equipment to be less likely to select cells which are loaded in downlink bands.

In one embodiment, the at least one radio coverage cell parameter comprises: at least one of: an indication of downlink transmission power of the at least one radio coverage cell; an indication of uplink noise rise of the at least one radio coverage cell; an indication of baseband channel element usage. It will be appreciated that a single parameter may be used to obtain an indication of cell loading, or a plurality of parameters may be used to determine an indication of cell loading. Furthermore, a logical relationship between parameters may be used to determine an indication of cell loading. Accordingly, it will be appreciated that a network control node, for example, an RNC, may be directly aware of the number of user equipment connected to each cell in a network, or may monitor parameters directly indicative of loading being experienced by a cell and how able resources available to a base station are meeting experienced load.

In one embodiment, the determining and generating steps occur in relation to all of the plurality of radio coverage cells. Accordingly, the entire network may be managed in response to actual loading rather than predicted loading.

In one embodiment, the generated indication of radio coverage cell loading comprises an offset to be applied to assessments made by the idle mode user equipment. Accordingly, that offset may be a value to be applied to a parameter or parameters directly measured by idle mode user equipment, for example, received pilot signal strength, or pilot signal to interference ratio measured at user equipment. That offset may be applied at idle mode user equipment before a selection ranking of available cells is made by idle mode user equipment, so that the offset is taken into account before selection or reselection of a cell occurs.

In one embodiment, the generated indication of radio coverage cell loading comprises a weighting to be applied to assessments made by the idle mode user equipment. Accordingly, a weighting may be used to influence measurements taken by user equipment to dissuade selection of loaded cells.

In one embodiment, the determining step is periodically repeated. Accordingly, the loading information is maintained as relevant to actual network operation.

A second aspect provides a computer program product operable, when executed on a computer, to perform a method according to the first aspect.

A third aspect provides a network control node operable to influence distribution of idle mode user equipment across a wireless communication network comprising a plurality of radio coverage cells, the network control node comprising: load determination logic operable to determine loading of at least one of the radio coverage cells based on an indication of at least one operating parameter of the at least one radio coverage cell; cell load indication generation logic operable to generate an indication of radio coverage cell loading for at least one of the plurality of cells; and communication logic operable to transmit the generated indication of radio coverage cell loading to the idle mode user equipment.

The third aspect recognises that the method of the first aspect may advantageously be undertaken by a control node in a wireless network. That control node may have some direct visibility of cell loading, for example, the network control node may comprise an RNC or MME. It will be appreciated that the method of the first aspect may be implemented in various network architectures, including small cell deployments and LTE.

In one embodiment, the load determination logic is operable to assess a time dependent radio coverage cell operating parameter.

In one embodiment, the radio coverage cell operating parameter is directly indicative of loading experienced by the at least one radio coverage cell.

In one embodiment, the radio coverage cell operating parameter is indicative of uplink loading in the at least one radio coverage cell.

In one embodiment, the radio coverage cell operating parameter is indicative of downlink loading in the at least one radio coverage cell.

In one embodiment, the radio coverage cell parameter comprises at least one of: an indication of downlink transmission power of the at least one radio coverage cell; an indication of uplink noise rise of the at least one radio coverage cell; an indication of baseband channel element usage.

In one embodiment, the load determination logic and cell load indication generation logic are operable to perform determining and generating steps in relation to all of the plurality of radio coverage cells.

In one embodiment, the cell load indication generation logic is operable to generate an indication of radio coverage cell loading comprising an offset to be applied to assessments made by the idle mode user equipment.

In one embodiment, the cell load indication generation logic is operable to generate an indication of radio coverage cell loading comprising a weighting to be applied to assessments made by the idle mode user equipment.

In one embodiment, the control node further comprises repetition logic operable to instruct said determination logic, generation logic and communication logic to periodically repeat their determining, generating and communicating steps.

A fourth aspect provides a method of selecting a radio coverage cell to which idle mode user equipment is to connect in a wireless communication network comprising a plurality of radio coverage cells, said method comprising:
receiving an indication of radio coverage cell signal strength experienced by said idle mode user equipment;
determining a dynamically generated indication of radio coverage cell loading; and selecting a radio coverage cell based on a ranking of radio coverage cells calculated on the basis of a preconfigured relationship between said indication of radio coverage cell signal strength and said indication of radio coverage cell loading.

Accordingly, the fourth aspect uses a dynamically generated loading parameter, generated in accordance with the first aspect, in a method of cell selection.

A fifth aspect provides a computer program product operable, when executed on a computer, to perform the method of the fourth aspect.

A sixth aspect provides idle mode user equipment operable to select a radio coverage cell to which to connect in a wireless communication network comprising a plurality of radio coverage cells, the user equipment comprising:
reception logic operable to receive an indication of radio coverage cell signal strength experienced by the idle mode user equipment;
determination logic operable to determine a dynamically generated indication of radio coverage cell loading; and
selection logic operable to select a radio coverage cell based on a ranking of radio coverage cells calculated on the basis of a preconfigured relationship between the indication of radio coverage cell signal strength and the indication of radio coverage cell loading.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further with reference to the accompanying drawings, in which:
Figure 1 illustrates the main components of a wireless telecommunications network according to one embodiment;
Figure 2a illustrates schematically an arrangement of base stations and user equipment according to one embodiment; and
Figure 2b illustrates schematically signalling in accordance with one embodiment occurring within a network such as that shown schematically in Figure 2a.

### DESCRIPTION OF THE EMBODIMENTS

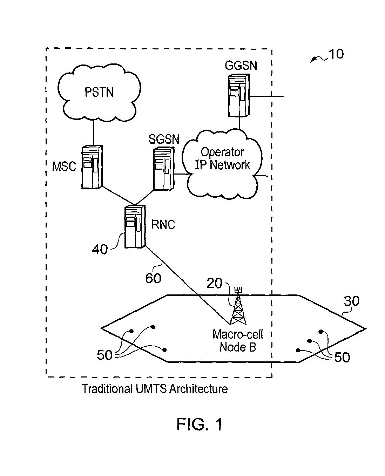

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

User equipment may operate in various modes in, for example, a UMTS telecommunications network. On initial turning on of user equipment within a cell, it will typically operate in "idle mode". Once it synchronizes and attaches itself to a base station it gains radio resource control (RRC) connection and in some RRC states is referred to as being in a connected state.

User equipment in idle mode does not have a dedicated radio resource control connection. If user equipment is RRC connected, it can be in one of five different RRC states: cell_DCH, cell_FACH, enhanced cell_FACH, cell_PCH or URA_PCH states, some of which are associated with dedicated resource allocation to user equipment and are called "connected" states.

When user equipment is in an idle mode and first turned on, it is typically operable to implement a process to camp on or associate itself with a cell supported by a base station of a wireless communication network 10.

Generally, two criteria are used for cell connection. User equipment is operable to determine pilot signal strength received and also pilot signal to interference ratio. The thresholds for those criteria are often fixed and do not change with time or with cell load. It has been recognized that by making cell selection thresholds and rankings implemented at user equipment in relation to pilot signal strength and pilot signal to interference ratio more dependent upon some function of cell load, it is possible to control the number of mobile terminals or user equipment "camped on" to different cells in the communications network. In particular, it may be possible to minimize the number of user equipment camped on to a base station if that particular base station is supporting a cell which is already heavily loaded with user equipment.

It will be appreciated that cell load may be determined by control nodes in a network in real time or dynamically by monitoring one or more of a number of factors being experienced by a cell supported by a base station. Those factors may include, for example, downlink transmission power being implemented within a cell, uplink noise rise, base band channel element usage and/or available backhaul bandwidth, and other similar operational characteristics indicative of cell loading at any given base station. Cell loading may be monitored in various ways; for example, it may be defined in relation to a predefined relationship between previously listed functions (for example, a logical OR relationship between operational parameters or characteristics).

By monitoring cell load for a given cell, cell selection thresholds, offsets or weightings may be specified in relation to that monitored cell load, for example, in the form of a look-up table, and those cell selection thresholds may be configurable to reflect the needs of communication network operators. By setting cell selection parameters, operators may more directly control the number of mobile terminals camped on in a cell in idle mode. As a result, it is possible to avoid unnecessary incurrence of hard handovers in the event that idle mode user equipment transitions to a connected state and a heavily loaded cell immediately needs to hand over to a neighbour to alleviate load. Those hard handovers typically have a higher risk of failure than cell selection or reselection processes. As a result, by avoiding hard handover processes, overall network performances may improve.

Known cell selection and reselection techniques rely on a weak coupling between pilot signal to interference ratio and cell load as an indicator of cell loading, and there is typically no possibility for operators to dynamically control the number of mobile terminals in idle mode at a cell level. By offering dynamically changeable cell selection or reselection criteria, aspects provide network operators with mechanisms to directly control the number of user equipment in idle mode in a particular cell. In turn, that allows operators to control cell load for user equipment in connected mode. As a result, the network can be operated in a manner which avoids a proliferation of hard handovers in a loaded cell, those processes having a high risk of failure but being required to balance cell load when idle mode user equipment transfer to operating in a connected mode.

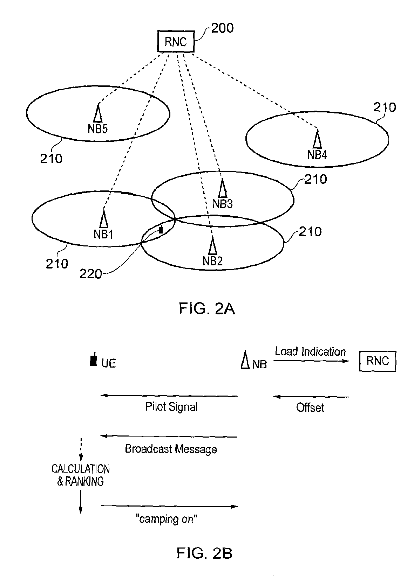

Figure 2a illustrates schematically an arrangement of base stations and user equipment according to one embodiment; and Figure 2b illustrates schematically signalling occurring within a network such as that shown schematically in Figure 2a in accordance with one embodiment.

Figure 2a illustrates an RNC 200 in communication with a plurality of base stations NBl to NB5. Each of those base stations supports the region of radio coverage 210. Those regions of radio coverage may comprise one or more cells of radio coverage.

User equipment 220 is located in cells supported by base stations connected to RNC 200. When idle mode user equipment 220 passes through a geographical area, it will pass through regions of radio coverage provided by base stations NB1 to NB5. Whilst in idle mode, the user equipment is operable to receive or see the pilot channel of one or more cells supported by base stations NB1 to NB5. Typically, when selecting which base station to be camped on, user equipment looks at signals being received from base stations and determines which base station is "best" in terms of signal strength. User equipment may do this by considering and assessing pilot signal strength received from each base station, or may consider signal to interference and noise ratio of a pilot signal received from each available base station. Each base station typically also transmits, in a system information broadcast, an offset determined at the time of network configuration. That offset in some network scenarios may be static and does not change over time. The offset is reflective of likely cell load rather than actual experienced load at a given moment in a particular cell supported by a base station. The configured offset may then be applied to measurements taken by user equipment 220 so that a ranking of cells supported by available base stations can be produced and the user equipment can camp on to the most appropriate available cell (generally the cell having the strongest signal to noise and interference ratio once offsets have been taken into account).

According to embodiments described herein, the offset transmitted by base stations in a system information broadcast message is calculated dynamically at the RNC in relation to actual loads being experienced in each cell. As a result, idle user equipment may be influenced by load being experienced within the network and the network can take steps to ameliorate any loading issues in a heavily loaded cell by ensuring fewer user equipment are likely to camp on within that heavily loaded cell.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of influencing distribution of idle mode user equipment across a wireless communication network comprising a plurality of radio coverage cells, said method comprising:
determining loading of at least one of said radio coverage cells based on an indication of at least one operating parameter of said at least one radio coverage cell;
generating an indication of radio coverage cell loading for at least one of said plurality of cells; and
communicating said generated indication of radio coverage cell loading to said idle mode user equipment.

2. A method according to claim 1, wherein said determining comprises assessing a time dependent radio coverage cell operating parameter.

3. A method according to any preceding claim, wherein said operating parameter is directly indicative of loading experienced by said at least one radio coverage cell.

4. A method according to any preceding claim, wherein said operating parameter is indicative of uplink loading in said at least one radio coverage cell.

5. A method according to any preceding claim, wherein said operating parameter is indicative of downlink loading in said at least one radio coverage cell.

6. A method according to any preceding claim, wherein said at least one operating parameter comprises at least one of: an indication of downlink transmission power of said at least one radio coverage cell; an indication of uplink noise rise of said at least one radio coverage cell; an indication of baseband channel element usage.

7. A method according to any preceding claim, wherein said determining and generating steps occur in relation to all of said plurality of radio coverage cells.

8. A method according to any preceding claim, wherein said generated indication of radio coverage cell loading comprises an offset to be applied to assessments made by said idle mode user equipment.

9. A method according to anyone of claims 1 to 7, wherein said generated indication of radio coverage cell loading comprises a weighting to be applied to assessments made by said idle mode user equipment.

10. A method according to any preceding claim, wherein the steps are periodically repeated.

11. A computer program product operable, when executed on a computer, to perform a method according to any one of claims 1 to 10.

12. A network control node operable to influence distribution of idle mode user equipment across a wireless communication network comprising a plurality of radio coverage cells, said network control node comprising:
load determination logic operable to determine loading of at least one of said radio coverage cells based on an indication of an operating parameter of said at least one radio coverage cells;
cell load indication generation logic operable to generate an indication of radio coverage cell loading for at least one of said plurality of cells; and
communication logic operable to transmit said generated indication of radio coverage cell loading to said idle mode user equipment.

13. A method of selecting a radio coverage cell to which idle mode user equipment is to connect in a wireless communication network comprising a plurality of radio coverage cells, said method comprising:
receiving an indication of radio coverage cell signal strength experienced by said idle mode user equipment;
determining a dynamically generated indication of radio coverage cell loading; and
selecting a radio coverage cell based on a ranking of radio coverage cells calculated on the basis of a preconfigured relationship between said indication of radio coverage cell signal strength and indication radio coverage cell loading.

14. A computer program product operable, when executed on a computer, to perform the method of claim 13.

15. Idle mode user equipment operable to select a radio coverage cell to which to connect in a wireless communication network comprising a plurality of radio coverage cells, said user equipment comprising:
reception logic operable to receive an indication of radio coverage cell signal strength experienced by said idle mode user equipment;
determination logic operable to determine a dynamically generated indication of radio coverage cell loading; and
selection logic operable to select a radio coverage cell based on a ranking of radio coverage cells calculated on the basis of a preconfigured relationship between the indication of radio coverage cell signal strength and the indication of radio coverage cell loading.
